# EUROPEAN PATENT SPECIFICATION

(11) **EP 3 057 027 B1**
(45) Date of publication and mention of the grant of the patent: **13.06.2018**
(21) Application number: 15155195.9
(22) Date of filing: 16.02.2015
(51) Int. Cl.: G06F 21/52, G06F 21/55, G06F 21/71, G06F 21/77, G06F 11/07

(54) **Method for secure data reading, computer program product and data handling system**
Verfahren zum sicheren Lesen von Daten, Computerprogrammprodukt und Datenhandhabungssystem
Procédé de lecture sécurisée de données, produit de programme informatique et système de manipulation de données

(43) Date of publication of application: 17.08.2016
(73) Proprietor: NXP B.V., 5656 AG Eindhoven (NL)
(72) Inventor: Schweer, Astrid, 5656 AG Eindhoven (NL); Köppen, Tim, 5656 AG Eindhoven (NL)
(74) Representative: Krott, Michel

(56) References cited:
- FR-A1- 2 888 960
- US-A1- 2003 204 696
- US-A1- 2011 072 222
- HAGAI BAR-EL ET AL: "The Sorcerer's Apprentice Guide to Fault Attacks", INTERNET CITATION, 7 May 2004 (2004-05-07), XP002329915, Retrieved from the Internet: URL:http://web.archive.org/web/20041016071 838/eprint.iacr.org/2004/100 [retrieved on 2005-05-27]

## Description

### FIELD

The present disclosure relates to a method for secure data reading. Furthermore, the present disclosure relates to a corresponding computer program product and to a corresponding data handling system.

### BACKGROUND

Fault attacks can be used, e.g., to compromise the security and integrity of data handling systems, such as computer products. In particular, fault attacks are an area of concern for smart cards. A fault attack introduces a fault into the system during the system's operation, thereby causing the system to deviate from its programmed or intended operation. For example, light attacks have been found to be a relatively easy way of introducing a fault and disturbing the program flow of a microcontroller. A light attack is executed by flashing light on a surface of, e.g., an integrated circuit (IC), typically while the IC is operating. Document (US 2011/0072222 A1) describes a method for secure data reading and a data handling system. The method protects the data reading from fault attacks by repeating read request in an interleaved manner.

### SUMMARY

There is disclosed a method for secure data reading in a data handling system, said data handling system comprising an address dispatcher for dispatching read requests to a memory comprising a first memory region, an anomaly signal producer and an anomaly handler, the method comprising the following steps: the address dispatcher dispatches a first read request to a first memory region; subsequent to dispatching the first read request, the address dispatcher dispatches a second read request to said first memory region; subsequent to dispatching the second read request, the address dispatcher dispatches a third read request to said first memory region; the anomaly signal producer produces a first anomaly signal if a result produced by the memory in response to the first read request does not agree with a result produced by the memory in response to the third read request; the anomaly signal producer produces a second anomaly signal if the memory does not produce a predefined result in response to the second read request; the anomaly handler concludes that a fault attack has occurred if at least one of the first anomaly signal and the second anomaly signal has been produced.

In illustrative embodiments of the method, the second read request is a read request with a known answer.

In further illustrative embodiments of the method, the memory further comprises a second memory region which is different from the first memory region, and the address dispatcher dispatches, between dispatching the first read request and the third read request, a further read request directed at the second memory region.

In further illustrative embodiments of the method, said fault attack is a light attack performed by means of a light source, and the second memory region is outside the spot of the light source.

In further illustrative embodiments of the method, the first read request, second read request and third read request are comprised in a first branch of a read stream, and the further read request is comprised in a second branch of said read stream.

In further illustrative embodiments of the method, the method further comprises concluding that no fault attack has occurred if neither the first anomaly signal nor the second anomaly signal has been produced.

Furthermore, there is disclosed a computer program product comprising instructions which, when being executed by a processing unit, cause said processing unit to carry out a method of the kind set forth.

Furthermore, there is disclosed a data handling system comprising an address dispatcher for dispatching read requests to a memory, an anomaly signal producer and an anomaly handler, said address dispatcher being arranged to: dispatch a first read request to a first memory region; subsequent to dispatching the first read request, dispatch a second read request to said first memory region; subsequent to dispatching the second read request, dispatch a third read request to said first memory region; said anomaly signal producer being arranged to: produce a first anomaly signal if a result produced by the memory in response to the first read request does not agree with a result produced by the memory in response to the third read request; produce a second anomaly signal if the memory does not produce a predefined result in response to the second read request; and said anomaly handler being arranged to: conclude that a fault attack has occurred if at least one of the first anomaly signal and the second anomaly signal has been produced.

In illustrative embodiments of the system, the second read request is a read request with a known answer.

In further illustrative embodiments of the system, the memory further comprises a second memory region which is different from the first memory region, and the address dispatcher is arranged to dispatch, between dispatching the first read request and the third read request, a further read request directed at the second memory region.

In further illustrative embodiments of the system, said fault attack is a light attack performed by means of a light source, and the second memory region is outside the spot of the light source.

In further illustrative embodiments of the system, the first read request, second read request and third read request are comprised in a first branch of a read stream, and the further read request is comprised in a second branch of said read stream.

In further illustrative embodiments of the system, the address dispatcher is further arranged to conclude that no fault attack has occurred if neither the first anomaly signal nor the second anomaly signal has been produced.

In further illustrative embodiments of the system, the address dispatcher is comprised in a memory controller.

In further illustrative embodiments of the system, the memory controller is a Flash memory controller or an EEPROM memory controller. The invention is defined by the appended independent claims.

### DESCRIPTION OF DRAWINGS

Embodiments will be described in more detail with reference to the appended drawings, in which:
Fig. 1 shows an illustrative embodiment of a data handling system 100;
Fig. 2A shows an illustrative embodiment of a method 200 for secure data reading in a data handling system of the kind set forth;
Fig. 2B shows a further illustrative embodiment of a method 214 for secure data reading in a data handling system of the kind set forth;
Fig. 2C shows a further illustrative embodiment of a method 218 for secure data reading in a data handling system of the kind set forth.

### DESCRIPTION OF EMBODIMENTS

Fault attacks are typically targeted at commands, such as conditional jumps or the test instructions preceding them. For example, fault attacks can be used to circumvent a verification of a personal identification number (PIN) in a smart card. If a user enters an incorrect PIN, he/she can execute a fault attack at the moment the program is about to jump away to a routine for handling wrong PINs. As a result of the fault attack the jump to the routine for handling wrong PINs is not executed and the program continues as if the PIN were correct. In this case the user gains, through the fault attack, the privileges associated with a correct PIN, even though he/she only has possession of a wrong PIN. Other classes of security attacks that use fault attacks are those on cryptographic algorithms, such as used in, e.g., cryptographic protocols. For example, using the fault attack, an attacker can cause the algorithm to produce a wrong value. By analyzing the type of errors that occur in this manner, the attacker is, in some circumstances, able to deduce, e.g., a secret key.

Light attacks affect a read access to a memory, both to volatile memory, such as RAM, and to non-volatile memory, such as Read Only Memory (ROM), EEPROM and Flash-memory. The effect of a light attack varies depending on the exact type of memory and the exact conditions. For example, in non-volatile memories, usually, it is not the content of the memory cell which is changed by the light attack, but only the value that is read back, which is momentarily changed; after the light attack is over, the memory may return to its previous content, which is not changed by the light attack. Depending on the exact conditions, the effect can be asymmetric, in that the bits tend to flip from one value more readily into another value than from the other value into the one value. As a further example, in volatile memory, a light attack may, effect either a permanent change in the memory or a momentary change during reading.

A fault attack introducing a single uninterrupted stretch of faults may be referred to as a simple fault attack. A fault attack compromising a single read from a memory may be referred to as a short fault attack. A simple fault attack compromising more than one reading operation, e.g., a long light flash covering more than one reading operation, may be referred to as a long fault attack. A fault attack comprising multiple independent faults may be referred to as a multiple fault attack.

In practice, fault attacks covering more than one reading operation from a memory may not be reliably detected. In particular, it is difficult to detect long fault attacks which are carried out on particular read operations in branches of read streams, i.e. branches of read operations performed on different memory regions which are spaced apart from each other. For example, the light attack might be performed using a laser beam with a certain spot size: a first memory region on which read operations of a first branch are performed might be within the laser spot size, and a second memory region, on which read operations of a second branch are performed, might not be within the laser spot size. In such a scenario, it is relatively difficult to detect long fault attacks on particular read operations in the first branch, because the read stream may have branched off to the second branch, or to a further branch.

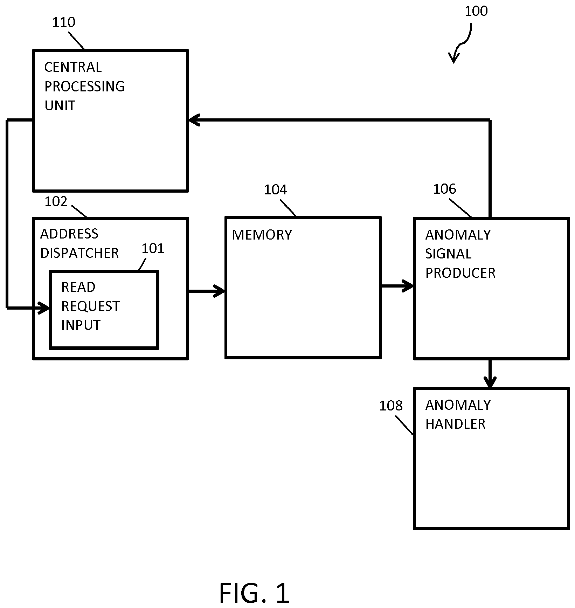

**Fig. 1** shows an illustrative embodiment of a data handling system 100. The data handling system 100 is capable of performing the presently disclosed method. The data handling system 100 may be based on, for example, a data handling system as described in patent application WO 2009/138892 A1 filed by NXP B.V. In the example of Fig. 1, the data handling system 100 comprises an address dispatcher 102, a memory 104, an anomaly signal producer 106, an anomaly handler 108 and a central processing unit (CPU) 110. The address dispatcher 102 comprises a read request input 101. The system may be embedded in a device, for example a smart card. The CPU 110 is connected to the address dispatcher 102 by means of a connection that is capable of transporting a read request. The address dispatcher 102 is connected to the memory 104 by means of a connection that is capable of transporting a read request. The memory 104 is configured to retrieve a data object in response to a read request. The memory 104 is arranged to forward the retrieved data object to the anomaly signal producer 106. The anomaly signal producer 106 is configured to examine the data objects retrieved by the memory 104 in a manner compatible with the method of dispatching used by the address dispatcher 102. The anomaly signal producer 106 is configured to conditionally send at least one anomaly signal to the anomaly handler 108.

In this example, the anomaly signal producer 106 is configured to send the retrieved data object to the CPU 110. The anomaly handler 108 is configured to take corrective action in case the anomaly handler 108 receives the anomaly signal. In operation, the CPU 110 executes software. The software may for example be: an application, operating system software, a library, system security code, or a network protocol. For example, the CPU 110 may execute a banking application that needs to verify a PIN. For example, the CPU 110 may execute a booting sequence, and needs to verify if the boot image is genuine.

The CPU 110 may need some data object from the memory 104. For example, the CPU 110 may need to know the next instruction to execute, or the next data object to operate on. For this purpose, the CPU 110 may send a read request to the read request input 101 comprised in the address dispatcher 102. The address dispatcher 102 decides how to schedule the read request, e.g., the address dispatcher 102 decides how often and when the read requests occurring at input 101 should be dispatched to the memory 104. Furthermore, the address dispatcher 102 employs the presently disclosed method.

If the address dispatcher 102 dispatches the read request, the read request is transported to the memory 104. The read request instructs the memory 104 to retrieve one or more data objects. Typically, the read request comprises an address within a memory region, i.e. a region containing one or more locations, such as memory cells, in the memory 104. The memory 104 retrieves at least the data objects that the read request instructs it to retrieve and forwards the data objects to the anomaly signal producer 106.

The anomaly signal producer 106 buffers the result of the read request, and/or compares the result of the read request with a result that was buffered earlier in response to an earlier similar read request. If the anomaly signal producer 106 finds that it has received a series of data objects that indicates a fault in the memory 104 or a fault attack, such as a light attack, the anomaly signal producer 106 produces the anomaly signal, and sends the anomaly signal to the anomaly handler 108. The anomaly signal producer 106 employs the presently disclosed method.

The anomaly signal may, for example, consist of a single bit of information, indicating that a fault has occurred. The anomaly signal may also comprise all relevant information needed for, e.g., debugging the application, and/or for allowing the anomaly handler 108 to draw a correct conclusion and, for instance, take corrective action. The anomaly handler 108 may thus be configured to take corrective action in case the anomaly handler 108 receives the anomaly signal. Corrective actions may include: logging the event, terminating the application, shutting down the system 100, initiating a system self-destruct sequence, blanking one or more memories, blanking and/or destroying one or more fuses, restarting the application, rebooting the system 100, and repeating the read request that caused the anomaly signal. The anomaly handler 108 may also decide not to take action, for example, if the fault occurs when a low-security application is being executed, or if the fault occurs in a special debug mode.

The data handling system 100 may be made using dedicated hardware, such as electronic circuits that are configured to carry out at least a part of the steps of the presently disclosed method. The data handling system 100 may be made from generic hardware that is controlled using software in operational use, or the data handling system 100 may comprise a combination of dedicated hardware, generic hardware and dedicated software to implement the data handling system 100. The memory 104 may be implemented as a memory bank. The connections between the address dispatcher 102, memory 104, anomaly signal producer 106 and anomaly handler 108 may be fabricated in a number of ways. For instance, a connection may be made in series, in parallel, or by means of a bus. In a variant of this embodiment the memory 104 may forward the retrieved data objects to both the CPU 110 and to the anomaly signal producer 106, and the anomaly signal producer 106 may not need to forward the retrieved data objects to the CPU 110. Thereby, the CPU 110 may get faster access to contents of the memory 104.

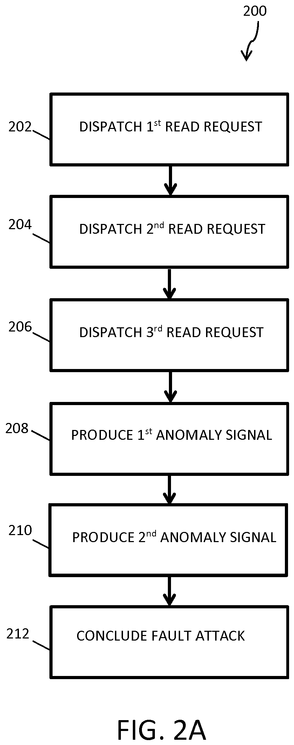

**Fig. 2A** shows an illustrative embodiment of a method 200 for secure data reading in a data handling system of the kind set forth. The method 200 comprises the following steps. At 202, the address dispatcher dispatches a first read request to a first region of the memory. Subsequently, at 204, the address dispatcher dispatches a second read request to the first memory region. Subsequently, at 206, the address dispatcher dispatches a third read request to the first memory region. At 208, the anomaly signal producer produces a first anomaly signal if a result produced by the memory in response to the first read request does not agree with a result produced by the memory in response to the third read request. Furthermore, at 210, the anomaly signal producer produces a second anomaly signal if the memory does not produce a predefined result in response to the second read request. Finally, at 212, the anomaly handler concludes that a fault attack has occurred if at least one of the first anomaly signal and the second anomaly signal has been produced. It is noted that dispatching a read request to a memory region may, in particular, imply dispatching a read request to a specific address or location within said region.

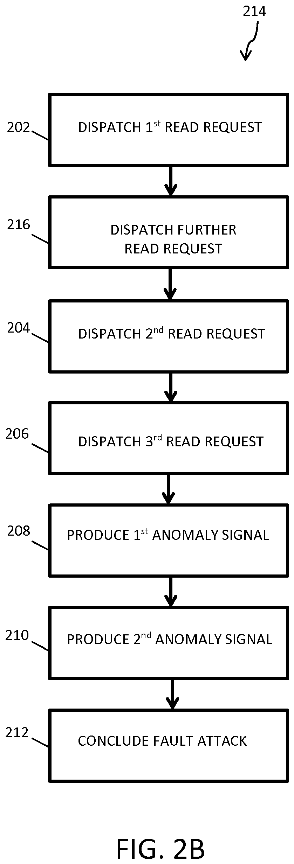

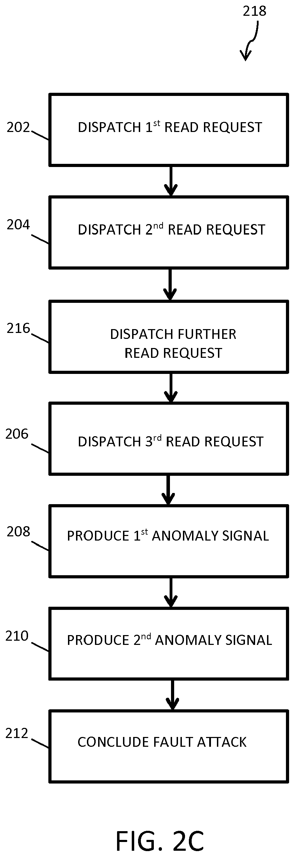

It is noted that the third read request enables detecting short fault attacks on the first read request, since the same results are expected from the memory, or at least results which agree with each other. More specifically, the third read request enables detecting fault attacks that are being performed at the moment that the first read request is dispatched, but that have ended before the third read request has been dispatched: basically, the third read request is a redundant read request that should yield the same result as the first read request. If the first read request has been hit by a fault attack, and the third read request has not, then the results produced by the memory in response to the first and the third read request will not agree with each other. Thus, the fault attack is detected. However, when the fault attack has not ended when the third read request (i.e. the redundant read request) is dispatched, and in case a further read request (i.e. a normal read request, possibly followed by a corresponding redundant read request) is dispatched to a second, different memory region (for instance to a memory region which is outside the spot of the light source performing the attack), then the attack will probably remain undetected. That is to say, if such a further read request would be within the spot of the light source, then a further redundant read request (not shown) that should yield the same result as the further read request would still enable detection of the fault attack. However, if the further read request is not affected by the fault attack, then such a long fault attack remains undetected. The same holds when multiple further read requests (i.e. multiple normal read requests, possibly followed by their corresponding redundant read requests) are dispatched between the first read request and the third read request. In all these cases, the read stream may have branched off to one or more memory regions which are different from the memory region to which the first, second and third read request are dispatched. In those cases, a long fault attack may also remain undetected, and the presently disclosed method may facilitate its detection. Examples of single further read requests are shown in Figs. 2B and 2C.

For instance, by dispatching the second read request (which should produce a predefined result) in case the read stream has branched off to the second memory region as a result of the further read request, it may be achieved that a long fault attack on the first read request is detected more easily. That is to say, a long fault attack might remain undetected because both the first read request and the third read request are affected by it (and thus changed in the same way, thus yielding the same result), but the second read request will in that case not yield the predefined result, so that the attack may still be detected. Thus, fault attacks of all possible lengths may be detected as long as the second read request is dispatched before the third read request.

**Fig. 2B** shows a further illustrative embodiment of a method 214 for secure data reading in a data handling system of the kind set forth. In this embodiment, the address dispatcher dispatches, at 216, a further read request to a second region of the memory, which is different from the first memory region. In particular, the further read request is dispatched between the first read request and the second read request. Alternatively, as shown in **Fig. 2C****,** the further read request may be dispatched between the second read request and the third read request. In either case, as explained above, the further read request may have caused the read stream to branch off to a memory region which is not affected by a fault attack performed on the first read request, and in case such a fault attack is a long fault attack, it might remain undetected. By dispatching, in accordance with the present disclosure, a read request with a predefined result between the first read request and the third read request (i.e. the redundant read request), the long fault attack may be detected more easily.

In illustrative embodiments, the second read request is implemented as a read request with a known answer. Thereby, a trusted value may be provided as a predefined result. The skilled person will appreciate that a read request with a known answer may, more specifically, be implemented in various forms, which are known per se. For instance, the second read request may be dispatched to a memory location in which a fixed value is stored, which should be returned by the memory as a response; this memory location may be adjacent to the memory location to which the first read request is dispatched. Alternatively, but without limitation, the read request with a known answer may be implemented as a read request in a read-known-answer mode. In that case, the second read request may be dispatched to the same location to which the first read request is dispatched, and the read-known-answer mode forces this location to answer in a predefined manner. Such a read-known-answer mode may be based on a feature called "disable all rows", which is available, for example, in Flash memories and EEPROM memories. It is noted that other implementations may be used as well. Furthermore, it is noted that the term "memory" as used herein should be interpreted broadly, in the sense that it may include storage units such as registers, optical storage disks and other storage media. Furthermore, it is noted that, although the above-described embodiments relate to light attacks, the present disclosure is not limited thereto. That is to say, the presently disclosed method and system may equally well be applied to other types of fault attacks.

The systems and methods described herein may be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "mobile device" refers to any type of portable electronic device, including a cellular telephone, a Personal Digital Assistant (PDA), smartphone, tablet etc. Furthermore, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CDROM).

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: data handling system
- 101: read request input
- 102: address dispatcher
- 104: memory
- 106: anomaly signal producer
- 108: anomaly handler
- 110: central processing unit
- 200: data reading method
- 202: dispatch first read request
- 204: dispatch second read request
- 206: dispatch third read request
- 208: produce first anomaly signal
- 210: produce second anomaly signal
- 212: conclude fault attack
- 214: data reading method
- 216: dispatch further read request
- 218: data reading method

## Claims

1. A method for secure data reading in a data handling system, said data handling system comprising an address dispatcher for dispatching read requests to a memory comprising a first memory region, an anomaly signal producer and an anomaly handler, the method comprising the following steps:
- the address dispatcher dispatches a first read request to a first memory region;
- subsequent to dispatching the first read request, the address dispatcher dispatches a second read request to said first memory region;
- subsequent to dispatching the second read request, the address dispatcher dispatches a third read request to said first memory region;
- the anomaly signal producer produces a first anomaly signal if a result produced by the memory in response to the first read request does not agree with a result produced by the memory in response to the third read request;
- the anomaly signal producer produces a second anomaly signal if the memory does not produce a predefined result in response to the second read request;
- the anomaly handler concludes that a fault attack has occurred if at least one of the first anomaly signal and the second anomaly signal has been produced,
wherein the memory further comprises a second memory region which is different from the first memory region, and wherein the address dispatcher dispatches, between dispatching the first read request and the third read request, a further read request directed at the second memory region.

2. A method as claimed in claim 1, wherein the second read request is a read request with a known answer.

3. A method as claimed in claim 1, wherein said fault attack is a light attack performed by means of a light source, and wherein the second memory region is outside the spot of the light source.

4. A method as claimed in claim 1 or 3, wherein the first read request, second read request and third read request are comprised in a first branch of a read stream, and wherein the further read request is comprised in a second branch of said read stream.

5. A method as claimed in any preceding claim, further comprising concluding that no fault attack has occurred if neither the first anomaly signal nor the second anomaly signal has been produced.

6. A computer program product comprising instructions which, when being executed by a processing unit, cause said processing unit to carry out a method as claimed in any preceding claim.

7. A data handling system comprising an address dispatcher for dispatching read requests to a memory, an anomaly signal producer and an anomaly handler,
said address dispatcher being arranged to:
- dispatch a first read request to a first memory region;
- subsequent to dispatching the first read request, dispatch a second read request to said first memory region;
- subsequent to dispatching the second read request, dispatch a third read request to said first memory region;
said anomaly signal producer being arranged to:
- produce a first anomaly signal if a result produced by the memory in response to the first read request does not agree with a result produced by the memory in response to the third read request;
- produce a second anomaly signal if the memory does not produce a predefined result in response to the second read request;
said anomaly handler being arranged to:
- conclude that a fault attack has occurred if at least one of the first anomaly signal and the second anomaly signal has been produced,
wherein the memory further comprises a second memory region which is different from the first memory region, and wherein the address dispatcher is arranged to dispatch, between dispatching the first read request and the third read request, a further read request directed at the second memory region.

8. A system as claimed in claim 7, wherein the second read request is a read request with a known answer.

9. A system as claimed in claim 7, wherein said fault attack is a light attack performed by means of a light source, and wherein the second memory region is outside the spot of the light source.

10. A system as claimed in claim 7 or 9, wherein the first read request, second read request and third read request are comprised in a first branch of a read stream, and wherein the further read request is comprised in a second branch of said read stream.

11. A system as claimed in any one of claims 7 to 10, the address dispatcher further being arranged to conclude that no fault attack has occurred if neither the first anomaly signal nor the second anomaly signal has been produced.

12. A system as claimed in any one of claims 7 to 11, wherein the address dispatcher is comprised in a memory controller.

13. A system as claimed in claim 12, wherein the memory controller is a Flash memory controller or an EEPROM memory controller.

## Patentansprüche

1. Ein Verfahren zum sicheren Datenlesen in einem Daten Handhabungssystem, wobei das Daten Handhabungssystem aufweist einen Adressenversender zum Versenden von Leseanfragen an einen Speicher, der aufweist einen ersten Speicherbereich, einen Anomaliesignal Erzeuger und einen Anomalie Handhaber, wobei das Verfahren die folgenden Schritte aufweist:
- der Adressenversender versendet eine erste Leseanfrage an einen ersten Speicherbereich;
- nachfolgend dem Versenden der ersten Leseanfrage, versendet der Adressenversender eine zweite Leseanfrage an den ersten Speicherbereich;
- nachfolgend dem Versenden der zweiten Leseanfrage, versendet der Adressenversender eine dritte Leseanfrage an den ersten Speicherbereich;
- der Anomaliesignal Erzeuger erzeugt ein erstes Anomaliesignal, wenn ein Ergebnis, das von dem Speicher in Antwort auf die erste Leseanfrage erzeugt wurde, nicht übereinstimmt mit einem Ergebnis, das von dem Speicher in Antwort auf die dritte Leseanfrage erzeugt wurde;
- der Anomaliesignal Erzeuger erzeugt ein zweites Anomaliesignal, wenn der Speicher nicht ein vordefiniertes Signal erzeugt in Antwort auf die zweite Leseanfrage;
- der Anomalie Handhaber schlussfolgert, dass ein Fehlerangriff stattgefunden hat, wenn mindestens eines von dem ersten Anomaliesignal und dem zweiten Anomaliesignal erzeugt wurde,
wobei der Speicher ferner aufweist einen zweiten Speicherbereich, der sich von dem ersten Speicherbereich unterscheidet, und wobei der Adressenversender zwischen dem Versenden der ersten Leseanfrage und der dritten Leseanfrage eine weitere Leseanfrage versendet, die an den zweiten Speicherbereich gerichtet ist.

2. Ein Verfahren wie in Anspruch 1 beansprucht, wobei die zweite Leseanfrage eine Leseanfrage mit einer bekannten Antwort ist.

3. Ein Verfahren wie in Anspruch 1 beansprucht, wobei der Fehlerangriff ein Lichtangriff ist, der mittels einer Lichtquelle durchgeführt wird, und wobei der zweite Speicherbereich außerhalb des Spots der Lichtquelle ist.

4. Ein Verfahren wie in Anspruch 1 oder 3 beansprucht, wobei die erste Leseanfrage, zweite Leseanfrage und dritte Leseanfrage enthalten sind in einem ersten Ast eines Lesestroms und wobei die weitere Leseanfrage enthalten ist in einem zweiten Ast des Lesestroms.

5. Ein Verfahren wie in einem vorstehenden Anspruch beansprucht, welches ferner aufweist
Schlussfolgern, dass kein Fehlerangriff stattgefunden hat, wenn weder das erste Anomaliesignal noch das zweite Anomaliesignal erzeugt wurde.

6. Ein Computerprogramm Produkt, das Anweisungen aufweist, die bewirken, wenn sie von einer Verarbeitungseinheit ausgeführt werden, dass die Verarbeitungseinheit ein Verfahren ausführt wie in einem vorstehenden Anspruch beansprucht.

7. Ein Daten Handhabungssystem, das einen Adressenversender aufweist für das Versenden von Leseanfragen an einen Speicher, einen Anomaliesignal Erzeuger und einen Anomalie Handhaber,
wobei der Addressenversender eingerichtet ist zu:
versenden eine erste Leseanfrage an einen ersten Speicherbereich;
nachfolgend dem Versenden der ersten Leseanfrage, versenden eine zweite Leseanfrage an den ersten Speicherbereich;
nachfolgend dem Versenden der zweiten Leseanfrage, versenden eine dritte Leseanfrage an den ersten Speicherbereich;
wobei der Anomaliesignal Erzeuger eingerichtet ist zu:
erzeugen ein erstes Anomaliesignal, wenn ein Ergebnis, welches von dem Speicher in Antwort auf die erste Leseanfrage erzeugt wurde, nicht übereinstimmt mit einem Ergebnis, das von dem Speicher in Antwort auf die dritte Leseanfrage erzeugt wurde;
erzeugen ein zweites Anomaliesignal, wenn der Speicher nicht ein vordefiniertes Ergebnis erzeugt in Antwort auf die zweite Leseanfrage;
wobei der Anomalie Handhaber eingerichtet ist zu:
schlussfolgern, dass ein Fehlerangriff stattgefunden hat, falls wenigstens eines von dem ersten Anomaliesignal und dem zweiten Anomaliesignal erzeugt wurde,
wobei der Speicher ferner aufweist einen zweiten Speicherbereich, der verschieden ist von dem ersten Speicherbereich, und wobei der Adressenversender eingerichtet ist, zwischen der ersten Leseanfrage und der dritten Leseanfrage eine weitere Leseanfrage zu versenden, welche an den zweiten Speicherbereich gerichtet ist.

8. Ein System wie in Anspruch 7 beansprucht, wobei die zweite Leseanfrage eine Leseanfrage mit einer bekannten Antwort ist.

9. Ein System wie in Anspruch 7 beansprucht, wobei der Fehlerangriff ein Lichtangriff ist, der mittels einer Lichtquelle durchgeführt wird, und wobei der zweite Speicherbereich außerhalb des Spots der Lichtquelle ist.

10. Ein System wie in Anspruch 7 oder 9 beansprucht, wobei die erste Leseanfrage, zweite Leseanfrage und dritte Leseanfrage enthalten sind in einem ersten Ast eines Lesestroms und wobei die weitere Leseanfrage enthalten ist in einem zweiten Ast des Lesestroms.

11. Ein System wie in einem der Ansprüche 7 bis 10 beansprucht, wobei der Adressenversender ferner eingerichtet ist zu schlussfolgern, dass kein Fehlerangriff stattgefunden hat, wenn weder das erste Anomaliesignal noch das zweite Anomaliesignal erzeugt wurde.

12. Ein System wie in einem der Ansprüche 7 bis 11 beansprucht, wobei der Adressenversender enthalten ist in einem Speicher Kontroller.

13. Ein System wie in Anspruch 12 beansprucht, wobei der Speicher Kontroller ein Flash Speicher Kontroller oder ein EEPROM Speicher Kontroller ist.

## Revendications

1. Procédé de lecture sécurisée de données dans un système de gestion de données, ledit système de gestion de données comprenant un répartiteur d'adresses pour envoyer des demandes de lecture à une mémoire comprenant une première région de mémoire, un producteur de signal d'anomalie et un gestionnaire d'anomalie, le procédé comprenant les étapes suivantes :
le répartiteur d'adresses envoie une première demande de lecture à une première région de mémoire ;
après avoir envoyé la première demande de lecture, le répartiteur d'adresses envoie une deuxième demande de lecture à ladite première région de mémoire ;
après avoir envoyé la deuxième demande de lecture, le répartiteur d'adresses envoie une troisième demande de lecture à ladite première région de mémoire ;
le producteur du signal d'anomalie produit un premier signal d'anomalie si un résultat produit par la mémoire en réponse à la première demande de lecture ne correspond pas à un résultat produit par la mémoire en réponse à la troisième demande de lecture ;
le producteur du signal d'anomalie produit un deuxième signal d'anomalie si la mémoire ne produit pas un résultat prédéfini en réponse à la deuxième demande de lecture ;
le gestionnaire d'anomalie conclut qu'une attaque par fautes s'est produite si l'un au moins du premier signal d'anomalie et du deuxième signal d'anomalie a été produit,
où la mémoire comprend en outre une deuxième région de mémoire qui est différente de la première région de mémoire, et où le répartiteur d'adresses envoie, entre l'envoi de la première demande de lecture et de la troisième demande de lecture, une autre demande de lecture dirigée vers la deuxième région de mémoire.

2. Procédé tel que revendiqué dans la revendication 1, dans lequel la deuxième demande de lecture est une demande de lecture avec une réponse connue.

3. Procédé selon la revendication 1, dans lequel ladite attaque par fautes est une attaque à la lumière effectuée au moyen d'une source de lumière, et où la deuxième région de mémoire se trouve à l'extérieur du spot de la source de lumière.

4. Procédé selon la revendication 1 ou la revendication 3, dans lequel la première demande de lecture, la deuxième demande de lecture et la troisième demande de lecture sont comprises dans une première branche d'un flux de lecture, et où la demande de lecture supplémentaire est comprise dans une deuxième branche dudit flux de lecture.

5. Procédé tel que revendiqué dans l'une quelconque des revendications précédentes, comprenant en outre de conclure qu'aucune attaque par fautes ne s'est produite si ni le premier signal d'anomalie ni le deuxième signal d'anomalie n'ont été produits.

6. Produit de programme informatique comprenant des instructions qui, lorsqu'elles sont exécutées par une unité de traitement, amènent ladite unité de traitement à exécuter un procédé tel que revendiqué dans l'une quelconque des revendications précédentes.

7. Système de gestion de données comprenant un répartiteur d'adresses pour envoyer des demandes de lecture à une mémoire, un producteur de signal d'anomalie et un gestionnaire d'anomalie, ledit répartiteur d'adresses étant agencé pour :
envoyer une première demande de lecture à une première région de mémoire ;
après avoir envoyé la première demande de lecture, envoyer une deuxième demande de lecture à ladite première région de mémoire ;
après avoir envoyé la deuxième demande de lecture, envoyer une troisième demande de lecture à ladite première région de mémoire ;
ledit producteur de signal d'anomalie étant agencé pour :
produire un premier signal d'anomalie si un résultat produit par la mémoire en réponse à la première demande de lecture ne correspond pas à un résultat produit par la mémoire en réponse à la troisième demande de lecture ;
produire un deuxième signal d'anomalie si la mémoire ne produit pas un résultat prédéfini en réponse à la deuxième demande de lecture ;
ledit gestionnaire d'anomalie étant agencé pour :
conclure qu'une attaque par fautes s'est produite si l'un au moins du premier signal d'anomalie et du deuxième signal d'anomalie a été produit,
où la mémoire comprend en outre une deuxième région de mémoire qui est différente de la première région de mémoire, et où le répartiteur d'adresses est agencé pour envoyer, entre l'envoi de la première demande de lecture et de la troisième demande de lecture, une autre demande de lecture dirigée vers la deuxième région de mémoire.

8. Système tel que revendiqué dans la revendication 7, dans lequel la deuxième demande de lecture est une demande de lecture avec une réponse connue.

9. Système tel que revendiqué dans la revendication 7, dans lequel ladite attaque par fautes est une attaque à la lumière effectuée au moyen d'une source de lumière, et où la deuxième région de mémoire se trouve à l'extérieur du spot de la source de lumière.

10. Système tel que revendiqué dans la revendication 7 ou la revendication 9, dans lequel la première demande de lecture, la deuxième demande de lecture et la troisième demande de lecture sont comprises dans une première branche d'un flux de lecture, et où la demande de lecture supplémentaire est comprise dans une deuxième branche dudit flux de lecture.

11. Un système tel que revendiqué dans l'une quelconque des revendications 7 à 10, le répartiteur d'adresses étant en outre agencé pour conclure qu'aucune attaque par fautes ne s'est produite si ni le premier signal d'anomalie ni le deuxième signal d'anomalie n'a été produit.

12. Système tel que revendiqué dans l'une quelconque des revendications 7 à 11, dans lequel le répartiteur d'adresses est compris dans un contrôleur de mémoire.

13. Système tel que revendiqué dans la revendication 12, dans lequel le contrôleur de mémoire est un contrôleur de mémoire Flash ou un contrôleur de mémoire EEPROM.
